# EUROPEAN PATENT APPLICATION

(11) **EP 1 197 850 A2**
(43) Date of publication of application: **17.04.2002**
(21) Application number: 01119954.4
(22) Date of filing: 17.08.2001
(51) Int. Cl.: G06F 9/44

(54) **Hyper text display apparatus**

(30) Priority: 13.09.2000 JP 2000278463
(71) Applicant: SHARP KABUSHIKI KAISHA, Osaka 545-8522 (JP)
(72) Inventor: Honda, Toshiyuki, Higashihiroshima-shi, Hiroshima (JP)
(74) Representative: Müller . Hoffmann & Partner Patentanwälte

(57) **Abstract**

A hyper text display apparatus for displaying a hyper text document including a plurality of units of link information includes a link extraction section for extracting the plurality of units of link information from the hyper text document; a link information classification section for classifying the plurality of units of link information into a plurality of groups so that each group includes a prescribed number of units of link information; a display section for displaying a list of the prescribed number of units of link information included in a specific group of the plurality of groups; an assignment section for assigning a code to each of the prescribed number of units of link information included in the specific group, the codes assigned to different units of link information being different from each other; an input section used to input each code; and a reading section for, when a code is input through the input section while the list of the prescribed number of units of link information included in the specific group is displayed, reading a document at a target link associated with each unit of link information to which the respective code is assigned.

## Description

### BACKGROUND OF THE INVENTION

### 1. FIELD OF THE INVENTION:

The present invention relates to a hyper text display apparatus for displaying a hyper text document which is provided by the WWW (World Wide Web) system on the Internet, and specifically to a hyper text display apparatus preferably usable in a terminal having a relatively small display area such as a cellular phone.

### 2. DESCRIPTION OF THE RELATED ART:

In general, a hyper text document on the WWW is described with a language referred to as the HTML (Hyper Text Markup Language). According to the HTML, a logical structure of a document, layout information and information on a link to another document are specified by a sign referred to as a "tag". A tag is a command expressed by an alphanumeric character, acting as an identifier, which is put in "< >". Link information is generally described with an anchor tag (or link tag) including a start tag "<A>" and an end tag "</A>". Information on a target link is described in a start tag "<A>" using a URL (Uniform Resource Locator), which is a notation system of an address of the WWW. Between the start tag "<A>" and the end tag "</A>", a character string referred to as a "hot text" is described, which represents the name of a document at the target link, or a keyword. Herein, the term "target link" is defined as a page which is linked to the document currently displayed.

In a conventional typical WWW browser, a document at a target link is obtained in the following manner. First, a hyper text document currently shown in a display area (referred to as an "original hyper text document") is scrolled using a mouse, a keyboard or the like, until a desired hot text described in the original hyper text document appears. Then, the cursor is put on the hot text, and the mouse is clicked or a corresponding key on the keyboard is pressed.

According to the HTML, a document at the target link can be requested using an accesskey attribute described in the start tag "<A>". The accesskey attribute is expressed using an identifier of an attribute value specified for the accesskey attribute. For example, the accesskey attribute is expressed as "accesskey=1". In a WWW browser conforming to this system, when the user presses a key having the identifier of the accesskey attribute value (in the above example, key "1"), a document at the target link is obtained even when the hot text indicating the target link is not displayed in the display area.

According to the conventional technology for displaying a document at a target link by operating a mouse or a keyboard, the mouse or the keyboard needs to be operated in repetition to scroll the document until the hot text indicating the target link is shown in the display area. This causes problems that, especially in a terminal having a relatively small display area, it is difficult and troublesome to find a desired target link.

According to a conventional technology for requesting a document at a target link using an accesskey attribute, the document at the target link can be obtained regardless of the portion of the document which is shown in the display area. In the case where a document is browsed by various terminals such as on, for example, the WWW, it is difficult for the creator of the document to accurately determine which key of each terminal is available as a key having an effective identifier of the accesskey value of the accesskey attribute. Even when the effective key is known, the creator of the document bears a heavy burden of, for example, preventing the number of links included in the document from exceeding the number of effective keys, and notifying the user of the association of the links and the keys.

### SUMMARY OF THE INVENTION

According to one aspect of the invention, a hyper text display apparatus for displaying a hyper text document including a plurality of units of link information includes a link extraction section for extracting the plurality of units of link information from the hyper text document; a link information classification section for classifying the plurality of units of link information into a plurality of groups so that each group includes a prescribed number of units of link information; a display section for displaying a list of the prescribed number of units of link information included in a specific group of the plurality of groups; an assignment section for assigning a code to each of the prescribed number of units of link information included in the specific group, the codes assigned to different units of link information being different from each other; an input section used to input each code; and a reading section for, when a code is input through the input section while the list of the prescribed number of units of link information included in the specific group is displayed, reading a document at a target link associated with each unit of link information to which the respective code is assigned.

In one embodiment of the invention, the hyper text display apparatus further includes a memory section for storing information on where in the hyper text document each unit of link information is described. When the respective code is input in a prescribed input method through the input section while the list of the prescribed number of units of link information included in the specific group is displayed, the display section displays a portion of the hyper text document, the portion including the specific unit of link information to which the respective code is assigned.

In one embodiment of the invention, the input section includes a button bearing the respective code assigned to each unit of link information. The display section displays the respective code together with each unit of link information.

In one embodiment of the invention, the input section includes a display group change instruction input section used to input an instruction to replace the display of the specific group with the display of a different group. The plurality of groups are arranged in a prescribed order. The hyper text display apparatus further includes a switch section for, when the instruction to replace the display of the specific group with the display of a different group is input by the display group change instruction input section, switching the display of the specific group into a display of a group immediately subsequent or immediately previous to the specific group.

In one embodiment of the invention, the hyper text display apparatus further includes a scroll section for scrolling the list of the prescribed number of units of link information.

In one embodiment of the invention, the input section includes a button bearing the respective code assigned to each unit of link information. The display section includes a timer for counting a time period in which the button has been pressed. When the time period counted by the timer is shorter than a prescribed time period, the reading section reads, into the reading section, the document at the target link associated with each unit of link information to which the respective code is assigned; and when the time period counted by the timer is equal to or longer than the prescribed time period, the display section displays a portion of the hyper text document, the portion including each unit of link information to which the respective code is assigned.

According to the present invention, a plurality of units of link information included in an original hyper text document is classified into a plurality of groups and each group is displayed on the display screen. Therefore, even when the display area is smaller than the size of the original hyper text document, the user does not need to scroll the document in repetition in search for a hot text indicating the desired unit of link information.

Since each unit of the link information on display in the list is associated with a specific component of an input section, the document at the target link can be rapidly obtained when the user finds the desired unit of link information.

According to the present invention, a portion of the original hyper text document corresponding to the selected unit of link information can be instantaneously confirmed and thus realizes easier determination of whether the unit of link information is desired by the user or not, even when the display area is relatively small as in a cellular phone, or when the hot text indicating the unit of link information in the original hyper text document is abstract or when a hyper text includes only alphanumeric characters and URLs and thus gives the user difficulty predicting the contents thereof. This is especially convenient for grasping the relationship between the descriptions in the original hyper text document and a plurality of units of link information when using a terminal having a relatively small display area. This system improves the efficiency of browsing, which is especially advantageous to browsing of paid sites.

According to the present invention, one or more units of link information can be sufficiently easily specified from a plurality of units of link information displayed in a list.

According to the present invention, even when an original hyper text document includes a plurality of units of link information which is classified into a plurality of groups, the group to be displayed can be switched sequentially so as to find a desired unit of link information rapidly.

According to the present invention, even when the amount of characters of hot text displayed in the link information list are very large, all the units of link information can be displayed.

According to the present invention, a unit of link information can be selected or specified by a prescribed input method, without providing any additional button or the like.

Thus, the invention described herein makes possible the advantages of providing a hyper text display apparatus for allowing the user to obtain a hyper text document at a target link by a simple operation without requiring a creator of the hyper text document to take special steps.

These and other advantages of the present invention will become apparent to those skilled in the art upon reading and understanding the following detailed description with reference to the accompanying figures.

### BRIEF DESCRIPTION OF THE DRAWINGS

Figure **1** is a block diagram illustrating a structure of a WWW browser apparatus having a hyper text display apparatus according to the present invention mounted thereon;
Figure **2** shows an example of a hyper text document analyzable by an HTML analysis section of the hyper text display apparatus according to the present invention;
Figure **3** shows an image of the hyper text document of Figure 2 which is displayed by a display device of the hyper text display apparatus according to the present invention;
Figure **4** shows images of a link information list of the hyper text document of Figure **2** which are displayed by the display device of the hyper text display apparatus according to the present invention;
Figure **5** shows a structure of an input device of the hyper text display apparatus according to the present invention;
Figure **6** is a flowchart illustrating an operation from reading to displaying of a hyper text document performed by the hyper text display apparatus according to the present invention;
Figure **7** is a flowchart illustrating an operation performed by the hyper text display apparatus according to the present invention while the link information list is displayed;
Figures **8A** through **8D** are flowcharts illustrating respective operations performed by the hyper text display apparatus according to the present invention when moving buttons are pressed while the link information list is displayed;
Figures **9A** and **9B** are flowcharts illustrating respective operations performed by hyper text display apparatus according to the present invention when a short-time pressing operation and a long-time pressing operation of one of the numerical buttons is performed while the link information list is displayed; and
Figure **10** shows an image of the hyper text document of Figure **2** which is shown in a sufficiently large display area by a conventional general browser.

### DESCRIPTION OF THE PREFERRED EMBODIMENTS

Hereinafter, the present invention will be described by way of illustrative examples with reference to the accompanying drawings.

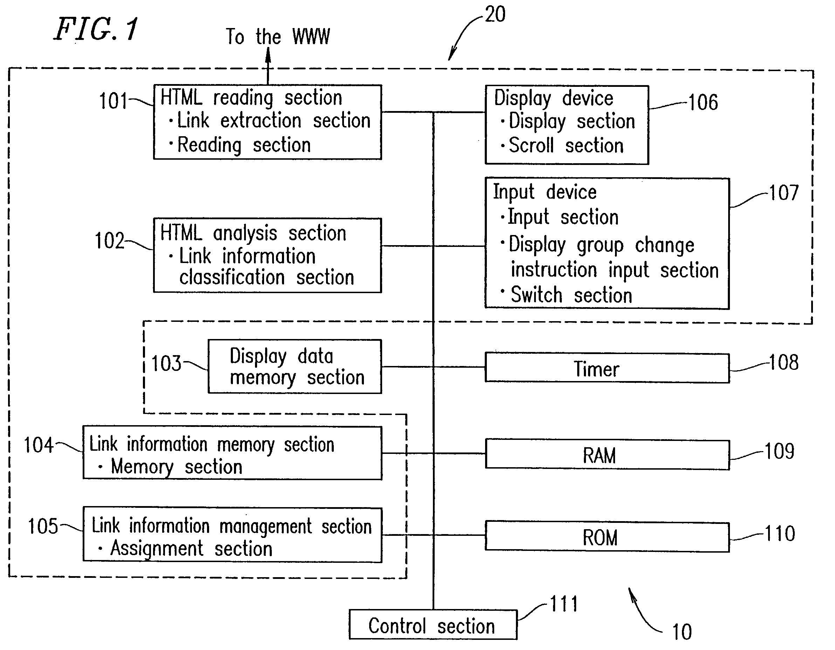

Figure **1** is a block diagram showing a structure of a WWW browser apparatus **10** having a hyper text display apparatus **20** according to the present invention mounted thereon.

As shown in Figure **1**, the WWW browser apparatus **10** includes an HTML reading section **101** (a link extraction section, and a reading section) for obtaining a hyper text document described by the HTML from the WWW, an HTML analysis section **102** (a link information classification section) for analyzing the obtained hyper text document so as to generate display data and a link information list, a display data memory section **103** for storing the display data, a link information memory section **104** (a memory section) for storing the link information list, a link information management section **105** (an assignment section) for managing the link information list, a display device **106** (a display section and a scroll section) for displaying the display data and the link information of the hyper text document, an input device **107** (an input section and a display group change instruction input section) used by a user to input information, a timer **108** for counting time, especially a time period in which a button provided in the input device **107** is pressed, a RAM (random access memory) **109** acting as a temporary memory area, a ROM (read only memory) **110** for storing icons and the like used for displaying a list of a plurality of units of link information (hereinafter, referred to as a "link information list"), and a control section **111** for performing the overall control. In Figure **1**, the hyper text display apparatus **20** includes the part surrounded by the dashed line.

The HTML reading section **101** has a communication section such as, for example, a modem or a LAN card, and reads a hyper text document corresponding to a specified URL in accordance with a protocol such as, for example, the HTTP (Hypertext Transfer Protocol). The hyper text document read by the HTML reading section **101** is temporarily stored in the RAM **109.**

The HTML analysis section **102** analyzes the hyper text document stored in the RAM **109** and thus generates display data and a link information list.

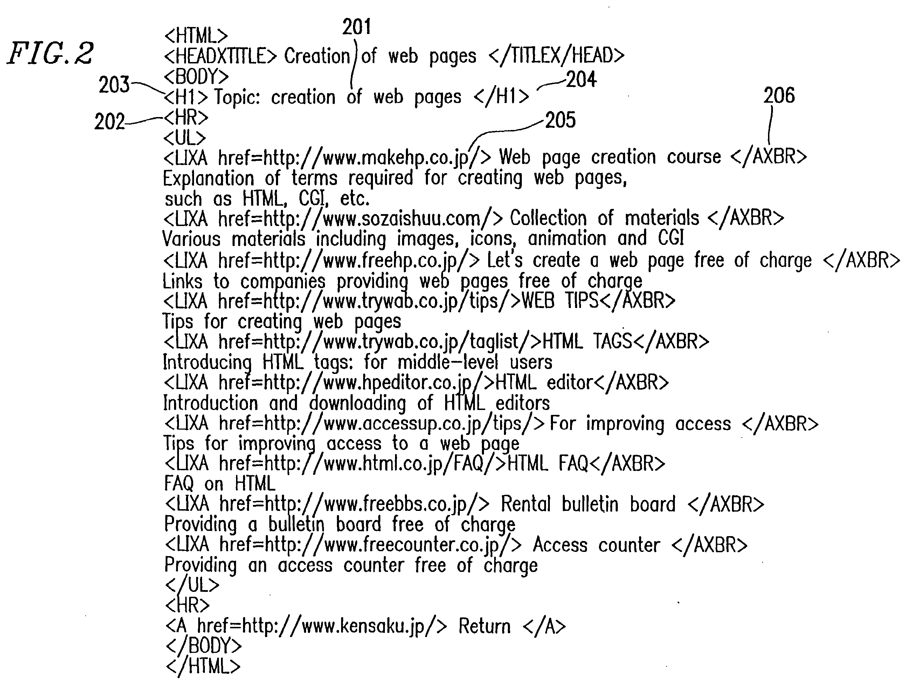

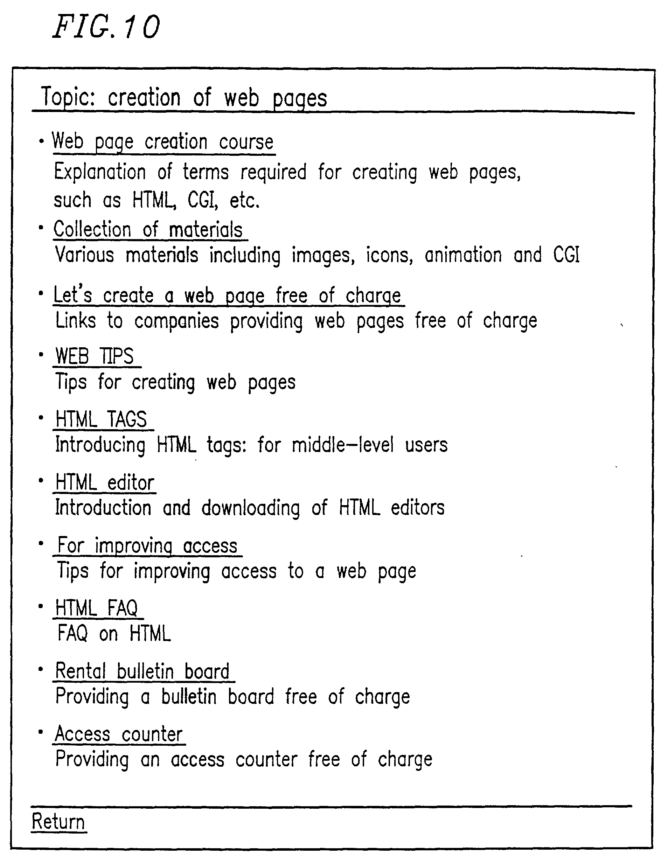

Figure **2** shows an example of the hyper text document analyzable by the HTML analysis section **102.** Figure **10** shows an image of the hyper text document of Figure **2** shown in a sufficiently large display area by the conventional general browser.

Referring to Figure **2**, the HTML analysis section **102** extracts data to be displayed in the hyper text document, for example, a character string **201** (e.g., "topic: creation of web pages"), and data on a breaking line or the like specified by a horizontal tag **202** "<HR>" together with additional information thereof. The HTML analysis section **102** then stores the extracted data in the display data memory section **103**. The additional information includes, for example, character information such as fonts, underline and the like, and coordinates of display data in a logical coordinate system. The additional information is generated by interpretation of a tag in the hyper text document by the HTML analysis section **102.** For example, a "headline" tag instructs that the character string **201** between a start tag **203** "<H1>" and an end tag **204** "</H1>" be displayed in the biggest-size headline characters. The character string **201** is associated with information indicating that the character size is maximum. The HTML analysis section **102** extracts the data to be displayed and the additional information in the state of being associated to each other, in a form like a structure of the C language. The HTML analysis section **102** then stores the extracted data and the additional information in the display data memory section **103.** The HTML analysis section **102** sequentially lays out a plurality of units of display data in a logical coordinate system having the origin (0,0) at the upper left corner, thus determining coordinates of each unit of display data.

Upon detecting a unit of link information specified by an anchor tag (including a start tag **205** "<A>" and an end tag **206** "</A>"), the HTML analysis section **102** adds the detected unit of link information to the link information list stored in the link information memory section **104**. The link information memory section **104** stores all of the units of link information in the hyper text document. In the link information memory section **104**, each unit of link information is provided with a pointer to an immediately previous or immediately subsequent unit of link information. Thus, a group list is generated. Herein, the "group list" is defined as a list of a plurality of groups arranged in one direction, each group including a plurality of units of link information arranged in a prescribed order. The display of each group can be replaced with the display of an immediately previous or immediately subsequent group. Each unit of link information is also provided with another pointer which indicates where in the display data memory section **103** a URL of a document at a target link (e.g., "http://www.makehp.co.jp/" (target link URL) and a hot text indicating a keyword of the document at the target link (e.g., "web page creation course") are stored. The link management section **105** refers to such a pointer so as to read the additional information including the hot text and the coordinates from the display data memory section **103**.

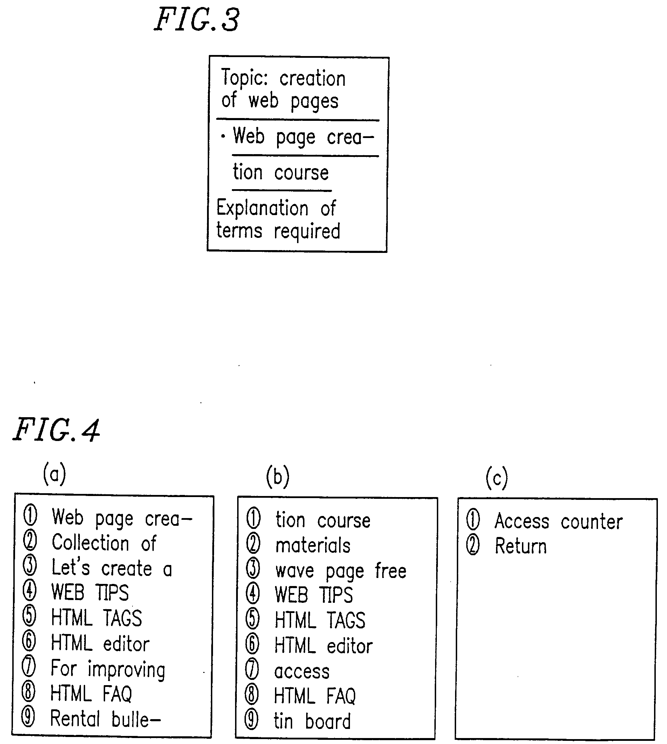

The display device **106** includes a display such as, for example, an LCD or a CRT. In this example, the display device **106** includes an LCD having a display area of 8 Japanese characters × 9 lines. (Note: since the size of one Japanese character corresponds to the size of two alphabets, this display area corresponds to 16 alphabets × 9 lines.) In order to display a hyper text document, the display device **106** reads the coordinates of each unit of display data from the display data memory section **103**, and extracts the units of display data included in a rectangular area corresponding to 8 Japanese characters × 9 lines, from the plurality of units of display data laid out in the logical coordinate system. The display device **106** then converts the coordinates of each unit of display data into relative coordinates in the rectangular area and displays the relative coordinates in the display area. At the start of the display operation, the rectangular area, i.e., a display area corresponding to one display screen is laid out so that the upper left corner of the rectangular area overlaps the origin of the logical coordinate system. The hyper text document can be scrolled by an input operation through the input device **107**. In this way, the entirety of the hyper text document can be displayed. Figure **3** shows an image of the hyper text document of Figure **2** which is displayed by the display device **106.**

The link information list displayed by the display device **106** includes hot text specified by the link information management section **105** and respective numerical icons of " ①" through " ⑨". Figure **4** shows images of the link information list of the hyper text document of Figure **2** which are displayed by the display device **106.** In Figure **4**, part (a) shows an image of initial display of the link information list, part (b) shows an image of display obtained when the link information list is scrolled to the right (toward the end of the lines), and part (c) shows an image of display of a group immediately subsequent to the group shown in parts (a) and (b).

In this example, the link information list shown in parts (a), (b) and (c) allows the user to select a unit of link information by one of buttons bearing nine types of numerals of "1" through "9" provided in the input device **107**. (These buttons bearing the numerals each act as a component of an input device.) The list is also displayed in nine lines, each line including one of the numerical icons of " ①" through " ⑨" shown at the head thereof and a hot text of each unit of link information shown immediately to the right of the respective numerical icon. When the number of lines which can be displayed in the display area is relatively small, a plurality of hot text can be displayed in each line. The display device **106** allocates spaces for the hot text at prescribed positions although the hot text is not entirely shown in the display area. When the link information list is instructed to be scrolled by the input device **107**, the portion of the link information list to be displayed can be scrolled from left to right or vice versa.

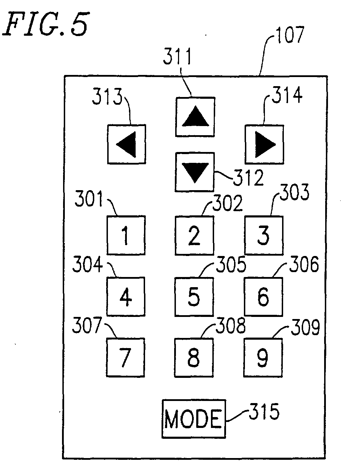

Figure **5** shows a structure of the input device **107**. The input device **107** includes numerical buttons **301** through **309** respectively bearing the nine types of numerals, moving buttons **311** through **314** for changing the portion to be shown in the display area, and a mode button **315** for changing the contents of display as described below. In the state where a hyper text document is displayed, the hyper text document can be scrolled up and down and left to right or vice versa by operating the moving buttons **311** through **314** so as to show a portion thereof in the display area. In the state where a link information list is displayed, the hot text can be moved from left (head of the lines) to right (end of the lines) or vice versa by operating the moving buttons **313** and **314** so as to show a portion thereof in the display area. Using the moving buttons **311** and **312**, the group of units of link information to be displayed can be sequentially switched to the previous groups or to the subsequent groups one by one. When a desired unit of link information is found in the link information list, a document at the target link can be read by pressing one of the numerical buttons **301** through **309** bearing the numeral at the head of the corresponding hot text. Using the mode button **315**, the link information list can be switched to the hyper text document or vice versa. Thus, the input device **107** acts as a switching section.

The moving button **311** will also be referred to as an "upward button", and the moving button **312** will also be referred to as a "downward button". The moving button **313** will also be referred to as a "leftward button", and the moving button **314** will also be referred to as a "rightward button".

The timer **108** counts a time period in which each of the numerical buttons **301** through **309** is pressed. The timer **108** then determines whether the time period is shorter than a prescribed value (hereinafter, the operation of pressing a button for a time period shorter than the prescribed value will be referred to as a "short-time pressing operation"), or equal to or more than the prescribed value (hereinafter, the operation of pressing a button for a time period equal to or more than the prescribed value will be referred to as a "long-time pressing operation"), and informs the control section **111** of the determination result. When the operation of the respective numerical button is the short-time pressing operation, the control section **111** instructs the HTML reading section **101** to read the document at the target link. When the operation of the respective numerical button is the long-time pressing operation, the control section **111** instructs the display device **106** to display a portion of the hyper text document describing the hot text of the corresponding unit of link information.

The link information management section **105** classifies the units of link information in the link information list stored in the link information memory section **104** into groups each including 9 units of link information sequentially from the leading unit in the link information list. Then, the link information management section **105** recognizes a pointer from the last unit of link information in one group (or specific group) to the leading unit of link information in the immediately subsequent group as a pointer to the immediately subsequent group, and also recognizes a pointer from the leading unit of link information in one group to the last unit of link information in the immediately previous group as a pointer to the immediately previous group. Thus, the link information management section **105** generates the group list described above. When the link information list is displayed, the link information management section **105** keeps information on which group is displayed and notifies the display device **106** of the hot text of the units of link information included in the group currently displayed. Furthermore, the numerical buttons **301** through **309** ("1" through "9") are each assigned to a respective unit of link information included in the group currently displayed from the leading unit of link information. When one of the buttons **301** through **309** is pressed, the link information management section **105** reads the corresponding unit of link information from the link information memory section **104**. When the operation is the short-time pressing operation, the link information management section **105** notifies the HTML reading section **101** of the URL of the target link associated with the corresponding unit of link information; and when operation is the long-time pressing operation, the link information management section **105** notifies the display device **106** of the coordinates of the portion of the hyper text document describing the hot text of the corresponding unit of link information.

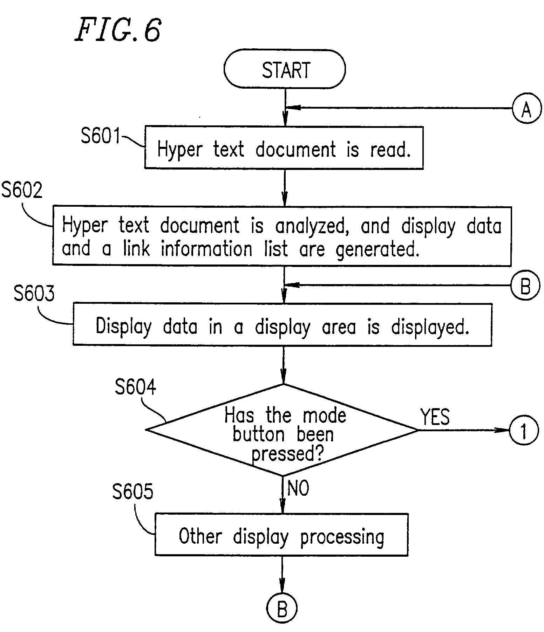

Hereinafter, an exemplary operation of the hyper text display apparatus will be described with reference to Figures **6** through **9B.**

Figure **6** is a flowchart illustrating an operation from reading to displaying of a hyper text document.

First, in step S601, the control section **111** notifies the HTML reading section **101** of a URL which specifies an address of a WWW server of an original hyper text document to be read and instructs the HTML reading section **101** to read the original hyper text document at the URL. The HTML reading section **101** connects itself to the WWW in accordance with a prescribed protocol and requests for the hyper text document at the URL. Upon receiving the hyper text document from the WWW server, the HTML reading section **101** stores the hyper text document in the RAM **109** and notifies the control section **111** that the reading of the hyper text document has been completed.

In step S602, upon receiving such a notification from the HTML reading section **101**, the control section **111** instructs the HTML analysis section **102** to analyze the hyper text document. The HTML analysis section **102** analyzes the hyper text document and generates display data and coordinates of each unit of display data. The HTML analysis section **102** stores the generated display data and the coordinates in the display data memory section **103**, and also stores a link information list in the link information memory section **104.** The HTML analysis section **102** then notifies the control section **111** that the analysis of the hyper text document has been completed.

In step S603, upon receiving such a notification from the HTML analysis section **102**, the control section **111** instructs the display device **106** to display the hyper text document. The display device **106** reads the display data and the coordinates from the display data memory section **103** and displays, on the display screen, a portion of the display data included in the display area.

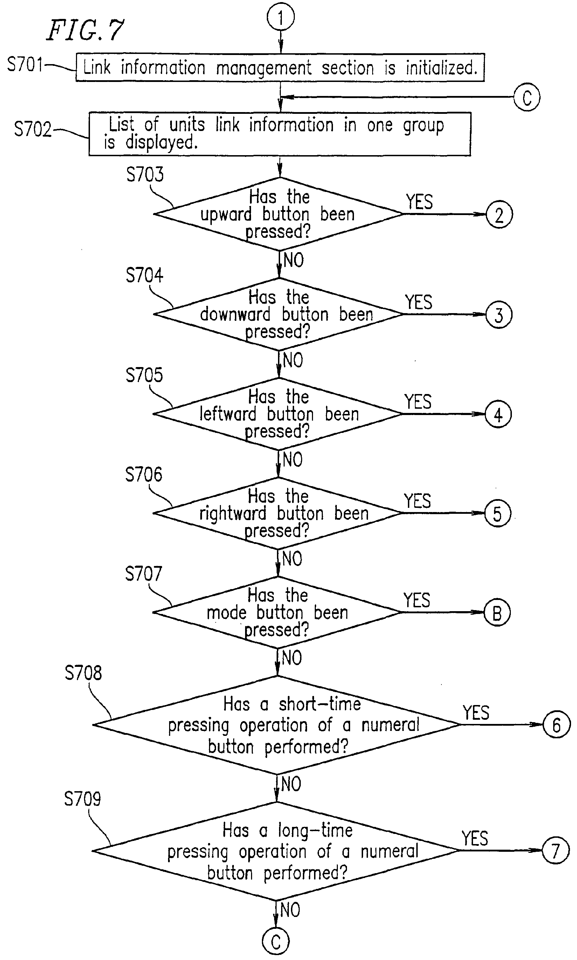

In step S604, it is determined whether the mode button **315** has been pressed or not. When the mode button **315** is determined to have been pressed in step S604, the link information list is displayed (process indicated by "1", and steps S701 through S709 shown in Figure **7**). When the mode button **315** is determined not to have been pressed in step S604, other display processing is performed while the hyper text document is continuously displayed in step S605 (e.g., scrolling of the hyper text document).

Figure **7** is a flowchart illustrating an operation performed while the link information list is displayed.

The control section **111** instructs the link information management section **105** to start displaying the link information list (step indicated as "1"). Then, in step S701, the link information management section **105** generates a group list from the link information list stored in the link information memory section **104** and selects a leading group as a group to be displayed (specific group). The link information management section **105** reads hot text of units of link information included in the leading group from the display data memory section **103** and notifies the display device **106** of the hot text.

In step S702, the display device **106** displays the notified hot text together with numerical icons of " ①" through " ⑨" at the head of the respective hot text in the display area as shown in part (a) of Figure **4**. The numerals are sequentially ordered. When the entire line of each hot text cannot be displayed in the display area, only the leading portion of each hot text is displayed in the initial state.

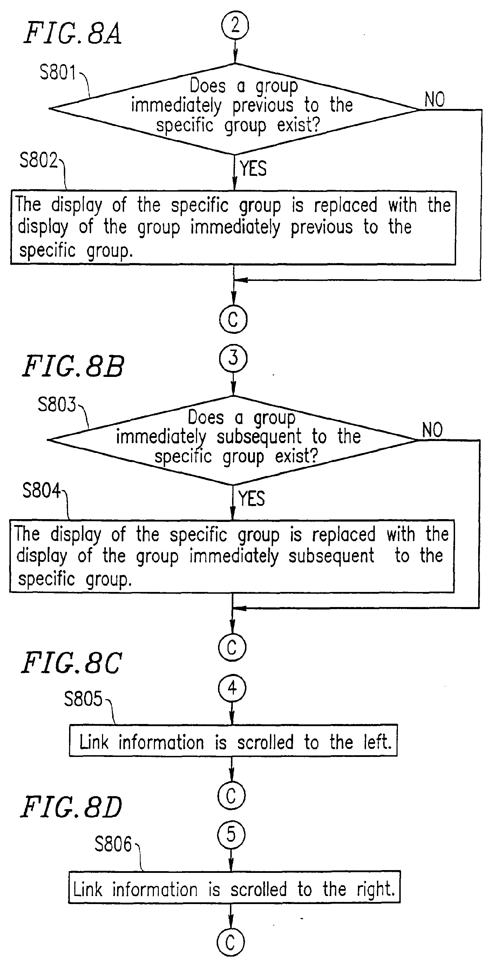

In step S703, it is determined whether the upward button **311** has been pressed or not. When the upward button **311** is determined to have been pressed in step S703, the specific group is switched to a group immediately previous to the specific group (process indicated by step "2", and steps S801 and S802 shown in Figure **8A**). When the upward button **311** is determined not to have been pressed in step S703, it is determined whether the downward button **312** has been pressed or not in step S704. When the downward button **312** is determined to have been pressed in step S704, the specific group is switched to a group immediately subsequent to the specific group (process indicated by step "3", and steps S803 and S804 shown in Figure **8B**).

When the downward button **312** is determined not to have been pressed in step S704, it is determined whether the leftward button **313** has been pressed or not in step S705. When the leftward button **313** is determined to have been pressed in step S705, the hot text currently displayed is scrolled to the left (process indicated by step "4", and steps S805 shown in Figure **8C**). When the leftward button **313** is determined not to have been pressed in step S705, it is determined whether the rightward button **314** has been pressed or not in step S706. When the rightward button **314** is determined to have been pressed in step S706, the hot text currently displayed is scrolled to the right (process indicated by step "5", and steps S806 shown in Figure **8D**).

When the rightward button **314** is determined not to have been pressed in step S706, it is determined whether the mode button **315** has been pressed or not in step S707. When the mode button **315** is determined to have been pressed in step S707, the control section **111** instructs the display device **106** to terminate the display of the link information list and to display the hyper text document. Then, the processing goes to step S603 shown in Figure **6** as indicated by letter "B" in Figures **7** and **6**.

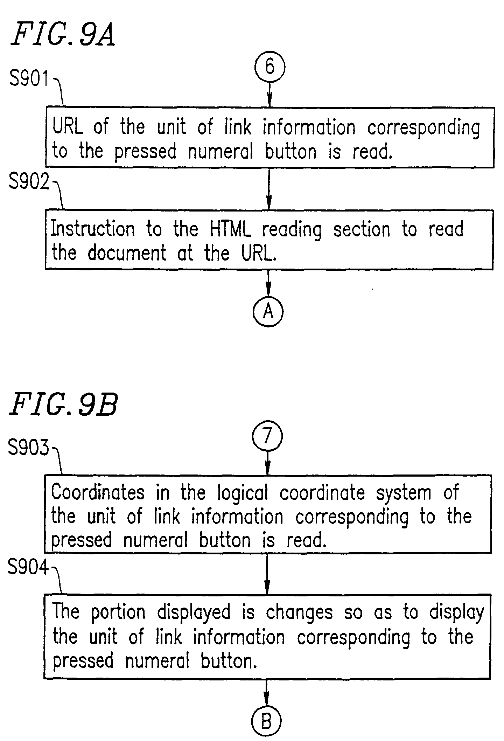

When the mode button **315** is determined not to have been pressed in step S707, it is determined whether one of the numerical buttons **301** through **309** has been pressed or not in step S708. When one of the numerical buttons **301** through **309** has been determined to have been pressed in step S708, the input device **107** starts the timer **108.** The timer **108** measures the time period in which the numerical button is pressed and notifies the control section **111** of whether the operation on the numerical button is a short-time pressing operation or a long-time pressing operation. When the operation is the short-time pressing operation ("yes" in step S708), a document at a target link corresponding to the selected unit of link information is read (process indicated by step "6", and steps S901 and S902 shown in Figure **9A**). When the operation is the long-time pressing operation ("yes" in step S709), a portion of the hyper text document including hot text of the corresponding unit of link information is displayed (process indicated by step "7", and steps S903 and S904 shown in Figure **9B**). Then, the processing goes to step S702 shown in Figure **7** as indicated by letter "C".

Figures **8A** through **8D** are flowcharts illustrating respective operations when the moving buttons **311** through **314** are pressed while the link information list is displayed.

Referring to Figure **8A**, in step S801, upon receiving a notification that the upward button **311** has been pressed from the input device **107**, the control section **111** instructs the link information management section **105** to replace the display of the specific group with the display of a group immediately previous to the specific group. In step S801, the link information management section **105** examines whether or not the group list includes another group immediately previous to the specific group. When another group is found to exist in step S801, the display of the specific group is replaced with the display of the group immediately previous to the specific group in step S802. Then, the link information management section **105** notifies the display device **106** of the hot text of the units of link information included in the group immediately previous to the specific group. When no group is found to exist in step S801, nothing is done by the link information management section **105.**

Referring to Figure **8B**, in step S803, upon receiving a notification that the downward button **312** has been pressed from the input device **107**, the control section **111** instructs the link information management section **105** to replace the display of the specific group currently displayed with the display of a group immediately subsequent to the specific group. In step S803, the link information management section **105** examines whether or not the group list includes another group immediately subsequent to the specific group. When another group is found to exist in step S803, the display of the specific group is replaced with the display of the group immediately subsequent to the specific group in step S804. Then, the link information management section **105** notifies the display device **106** of the hot text of the units of link information included in the group immediately subsequent to the specific group. When no group is found to exist in step S801, nothing is done by the link information management section **105.**

In Figure **4**, part (c) shows an image displayed when the user presses the downward button **312** while the image shown in part (a) is displayed. When the user presses the upward button **311** while the image shown in part (c) is displayed, the image shown in part (a) is displayed.

Referring to Figure **8C**, in step S805, upon receiving a notification that the leftward button **313** has been pressed from the input device **107**, the control section **111** instructs the display device **106** to scroll the hot text to the left. When a character string exists to the left of the hot text currently displayed, the display device **106** scrolls the hot text so as to display the character string.

Referring to Figure **8D**, in step S806, upon receiving a notification that the rightward button **314** has been pressed from the input device **107,** the control section **111** instructs the display device **106** to scroll the hot text to the right. When a character string exists to the right of the hot text currently displayed, the display device **106** scrolls the hot text so as to display the character string.

In Figure **4**, part (b) shows an image displayed when the user presses the rightward button **314** while the image shown in part (a) is displayed. When the user presses the leftward button **313** while the image shown in part (b) is displayed, the image shown in part (a) is displayed.

Figures **9A** and **9B** are flowcharts illustrating respective operations when a short-time pressing operation and a long-time pressing operation of one of the numerical buttons **301** through **309** is performed while the link information list is displayed.

Referring to Figure **9A**, in step S901, upon receiving a notification that a short-time pressing operation of one of the numerical buttons **301** through **309** is performed, the control section **111** instructs the link information management section **105** to notify the URL of the target link of the link information corresponding to the pressed button (one of the numerical buttons **301** through **309**). The link information management section **105** reads such an URL from the link information memory section **104** and notifies the control section **111** of the URL.

Then, in step S902, the control section **111** instructs the HTML reading section **101** to read the hyper text document at the notified URL. The HTML reading section **101** starts reading the document. Then, the processing goes to step S601 shown in Figure **6** as indicated by letter "A" in Figures **9A** and **6**. For example, when the numerical button **302** bearing the numeral "2" while the image shown in part (a) of Figure **4** is displayed, the document at the URL of the second target link in the link information list shown in Figure **2**, i.e., "http://www.sozaishuu.com/" is read by the HTML reading section **101.**

Referring to Figure **9B**, in step S903, upon receiving a notification that a long-time pressing operation of one of the numerical buttons **301** through **309** is performed, the control section **111** interrogates the link information management section **105** for information on where the hot text of the unit of link information corresponding to the pressed button (one of the numerical buttons **301** through **309**) is placed by the HTML analysis section **102**. The link information management section **105** reads the unit of link information, corresponding to the pressed button among the units of link information included in the group currently displayed, from the link information memory section **104**. The link information management section **105** also follows the pointer in the hot text included in the read unit of link information so as to read the coordinates in the logical coordinate system of the hot text from the display data memory section **103.** Then, the link information management section **105** notifies the control section **111** of the coordinates.

In step S904, the control section **111** instructs the display device **106** to display a portion of the hyper text document corresponding to the coordinates. The display device **106** terminates displaying the link information list, and displays the hyper text document by scrolling the hyper text document so that the portion corresponding to the coordinates is in the display area.

As described above, according to the hyper text display apparatus of the present invention, a plurality of units of link information included in an original hyper text document are classified into a plurality of groups each including a prescribed number of units of link information, the prescribed number corresponding to the number of the components (e.g., buttons) of the input device (in the above example, the number of the numerical buttons). Each of the groups is displayed in the display area. Therefore, the user does not need to scroll the document in repetition in search of the desired unit of link information.

According to the present invention, the plurality of units of link information displayed in the list are associated with a respective simple component of an input device such as, for example, numerical buttons **301** through **309.** In addition, a plurality of "input methods", for example, a short-time pressing operation and a long-time pressing operation of the same button causes different operations of the device. For example, when the short-time pressing operation is performed, the document at the selected target link is read; whereas when the long-time pressing operation is performed, a portion of the original hyper text document corresponding to the selected unit of link information is displayed. Due to such a system, even when the display area is relatively small as in a cellular phone, when the hot text indicating the unit of link information in the original hyper text document is abstract, or when a hyper text includes only alphanumeric characters and URLs and thus gives the user difficulty predicting the contents thereof, the portion of the original hyper text document corresponding to the selected unit of link information can be instantaneously confirmed. Thus, it is easily determined whether the unit of link information is desired by the user or not.

An "input method" can be double-clicking or simultaneous pressing of two or more other buttons in addition to the short-time pressing operation and the long-time pressing operation.

In the above-described example, a hyper text document is obtained from a WWW server. The present invention is applicable for reading a document from a memory medium such as, for example, a hard disk or a CD-ROM. In the above-described example, the link information is generated from an anchor tag described in a hyper text document. When the target link is not explicitly described by the anchor tag or the like, the link information can be generated by, for example, extracting a URL-system character string included in a text document.

The scrolling can be realized when the user presses a button indicating the direction (up, down, left, or right) or can be realized at a certain time interval using a timer.

As described above, according to the present invention, a list of a plurality of units of link information included in an original hyper text document is displayed in a display area. Therefore, the user does not need to scroll the document in repetition in search of the desired unit of link information.

By simply pressing a button bearing the sign or numeral displayed in association with a specific unit of link information in the link information list, the document at the target link can be read and displayed or a portion of the original hyper text document corresponding to the specific unit of link information can be displayed.

In an embodiment in which the time period in which a button is pressed is determined, two operations (i.e., reading of a document at a target link and display of a portion of an original hyper text document corresponding to the selected unit of link information) can be switched to each other by changing the length of time in which the button is pressed.

In an embodiment in which a section for issuing an instruction to change the group to be displayed, or a scrolling section is provided, all the units of link information can be displayed when the number of units of link information is excessive or when all the units of link information cannot be displayed at once in the display area.

Various other modifications will be apparent to and can be readily made by those skilled in the art without departing from the scope and spirit of this invention. Accordingly, it is not intended that the scope of the claims appended hereto be limited to the description as set forth herein, but rather that the claims be broadly construed.

## Claims

1. A hyper text display apparatus for displaying a hyper text document including a plurality of units of link information, comprising:
a link extraction section for extracting the plurality of units of link information from the hyper text document;
a link information classification section for classifying the plurality of units of link information into a plurality of groups so that each group includes a prescribed number of units of link information;
a display section for displaying a list of the prescribed number of units of link information included in a specific group of the plurality of groups;
an assignment section for assigning a code to each of the prescribed number of units of link information included in the specific group, the codes assigned to different units of link information being different from each other;
an input section used to input each code; and
a reading section for, when the code is input through the input section while the list of the prescribed number of units of link information included in the specific group is displayed, reading a document at a target link associated with each unit of link information to which the respective code is assigned.

2. A hyper text display apparatus according to claim 1, further comprising a memory section for storing information on where in the hyper text document each unit of link information is described,
wherein, when the respective code is input in a prescribed input method through the input section while the list of the prescribed number of units of link information included in the specific group is displayed, the display section displays a portion of the hyper text document, the portion including the specific unit of link information to which the respective code is assigned.

3. A hyper text display apparatus according to claim 1,
wherein:
the input section includes a button bearing the respective code assigned to each unit of link information, and
the display section displays the respective code together with each unit of link information.

4. A hyper text display apparatus according to claim 1, wherein:
the input section includes a display group change instruction input section used to input an instruction to replace the display of the specific group with the display of a different group,
the plurality of groups are arranged in a prescribed order, and
the hyper text display apparatus further includes a switch section for, when the instruction to replace the display of the specific group with the display of a different group is input by the display group change instruction input section, switching the display of the specific group into a display of a group immediately subsequent or immediately previous to the specific group.

5. A hyper text display apparatus according to claim 1, further comprising a scroll section for scrolling the list of the prescribed number of units of link information.

6. A hyper text display apparatus according to claim 1, wherein:
the input section includes a button bearing the respective code assigned to each unit of link information,
the display section includes a timer for counting a time period in which the button has been pressed, and
when the time period counted by the timer is shorter than a prescribed time period, the reading section reads, into the reading section, the document at the target link associated with each unit of link information to which the respective code is assigned; and when the time period counted by the timer is equal to or longer than the prescribed time period, the display section displays a portion of the hyper text document, the portion including each unit of link information to which the respective code is assigned.
